Europäisches Patentamt

European Patent Office

Office européen des brevets

Veröffentlichungsnummer: **0 300 438**
**A2**

# EUROPÄISCHE PATENTANMELDUNG

Anmeldenummer: **88111637.0**

Anmeldetag: **20.07.88**

Int. Cl.⁴ **G06F 15/30 , G07F 7/10**

Priorität: **24.07.87 DE 3724487**

Veröffentlichungstag der Anmeldung:
**25.01.89 Patentblatt 89/04**

Benannte Vertragsstaaten:
**AT BE CH DE FR GB GR IT LI LU NL SE**

Anmelder: **Scheidt & Bachmann GMBH**
**Breite Strasse 132**
**D-4050 Mönchengladbach 2(DE)**

Erfinder: **Miller, Gert**
**Schongauer Strasse 19**
**D-4050 Mönchengladbach 1(DE)**

Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**D-4000 Düsseldorf 11(DE)**

Verfahren zur Weitergabe von Daten einer Datenverarbeitungsanlage an eine externe Datenverarbeitung.

Die Erfindung betrifft ein Verfahren zur Weitergabe von Daten einer Datenverarbeitungsanlage, beispielsweise eines Personal-Computers (PC), an eine externe Datenverarbeitung mittels Datenfernübertragung (DFÜ) zwecks Weiterverarbeitung der Daten, die im Rahmen des bargeldlosen Zahlungsverkehrs zur Identifizierung, Autorisierung und Rechnungslegung bzw. Bilanzerstellung oder dgl. dienen. Um auf möglichst einfache und kostengünstige Weise einen auch später überprüfbaren Nachweis über die entnommenen Daten zu schaffen, d.h. eine nachprüfbare und sichere Datenweitergabe zu ermöglichen, werden die weiterzugebenden Daten vor der Weitergabe an die externe Datenverarbeitung durch einen in der Datenverarbeitungsanlage (PC) vorhandenen Drucker ausgedruckt und erst anschließend über die Datenfernübertragung (DFÜ) weitergegeben.

EP 0 300 438 A2

## Verfahren zur Weitergabe von Daten einer Datenverarbeitungsanlage an eine externe Datenverarbeitung

Die Erfindung betrifft ein Verfahren zur Weitergabe von Daten einer Datenverarbeitungsanlage, beispielsweise eines Personal-Computers (PC), an eine externe Datenverarbeitung mittels Datenfernübertragung (DFÜ) zwecks Weiterverarbeitung der Daten, die im Rahmen des bargeldlosen Zahlungsverkehrs zur Identifizierung, Autorisierung und Rechnungslegung bzw. Bilanzerstellung oder dgl. dienen.

Es ist bereits bekannt, die Daten einer Datenverarbeitungsanlage an eine externe Datenverarbeitung mittels Datenfernübertragung (DFÜ) weiterzugeben, um in dieser externen Datenverarbeitung beispielsweise eine Bilanz oder Abrechnungen zu erstellen sowie Unterlagen für ein Bankeinzugsverfahren herzustellen. Die eigentliche Fernübertragung der Daten kann hierbei auf Richtigkeit überwacht werden, beispielsweise durch den sogenannten CRC-Check, Parity-Check oder dgl.

Dieses bekannte Verfahren hat den Nachteil, daß Fehler bei der Entnahme der Daten aus der Datenverarbeitungsanlage unmittelbar bei der Entnahme nicht festgestellt werden können und daß derartige Fehler später nicht nachweisbar sind, da keine externe Aufzeichnung der entnommenen Daten erfolgt. Der Betreiber der Datenverarbeitungsanlage hat demgemäß keine Möglichkeiten, zu einem späteren Zeitpunkt nachzuweisen, daß die seiner Datenverarbeitungsanlage entnommenen Daten fehlerhaft waren.

Der Erfindung liegt die Aufgabe zugrunde, auf möglichst einfache und kostengünstige Weise einen auch später überprüfbaren Nachweis über die entnommenen Daten zu schaffen, d.h. eine nachprüfbare und sichere Datenweitergabe zu ermöglichen.

Die Lösung dieser Aufgabenstellung durch die Erfindung ist dadurch gekennzeichnet, daß die weiterzugebenden Daten vor der Weitergabe an die externe Datenverarbeitung durch einen in der Datenverarbeitungsanlage (PC) vorhandenen Drucker ausgedruckt und erst anschließend über die Datenfernübertragung (DFÜ) weitergegeben werden.

Das erfindungsgemäße Verfahren ergibt den Vorteil, daß der Betreiber der Datenverarbeitungsanlage (PC) den Ausdruck als Nachweis bei späteren Reklamationen verwenden kann, und zwar immer dann, wenn er feststellt, daß die in der externen Datenverarbeitung weiterverarbeiteten Daten zu falschen oder unvollständigen Ergebnissen geführt haben.

Zur Weiterbildung des erfindungsgemäßen Verfahrens wird weiterhin vorgeschlagen, die ausgedruckten Daten zuerst mit den in der Datenverarbeitungsanlage (PC) gespeicherten Daten zu vergleichen, z.b. mittels Barcode und Lesestift, und eine Freigabe zur Weitergabe der Daten über die Datenfernübertragung (DFÜ) nur dann zu erteilen, wenn der Vergleich eine Übereinstimmung der ausgedruckten mit den gespeicherten Daten ergeben hat.

Hierdurch ergibt sich nicht nur ein Ausdruck als Nachweis bei eventuellen späteren Reklamationen, sondern es wird sichergestellt, daß keine unüberprüften und fehlerhaften Daten der Datenfernübertragung (DFÜ) zur Weiterverarbeitung in der externen Datenverarbeitung aufgegeben werden.

## Ansprüche

1. Verfahren zur Weitergabe von Daten einer Datenverarbeitungsanlage, beispielsweise eines Personal-Computers (PC), an eine externe Datenverarbeitung mittels Datenfernübertragung (DFÜ) zwecks Weiterverarbeitung der Daten, die im Rahmen des bargeldlosen Zahlungsverkehrs zur Identifizierung, Autorisierung und Rechnungslegung bzw. Bilanzerstellung oder dgl. dienen **dadurch gekennzeichnet,** daß die weiterzugebenden Daten vor der Weitergabe an die externe Datenverarbeitung durch einen in der Datenverarbeitungsanlage (PC) vorhandenen Drucker ausgedruckt und erst anschließend über die Datenfernübertragung (DFÜ) weitergegeben werden.

2. Verfahren nach Anspruch 1, dadurch gekennzeichnet, daß die ausgedruckten Daten zuerst mit den in der Datenverarbeitungsanlage (PC) gespeicherten Daten verglichen werden und daß eine Freigabe zur Weitergabe der Daten über die Datenfernübertragung (DFÜ) nur dann erteilt wird, wenn der Vergleich eine Übereinstimmung der ausgedruckten mit den gespeicherten Daten ergeben hat.